# EUROPEAN PATENT APPLICATION

(11) **EP 4 474 638 A1**
(43) Date of publication of application: **11.12.2024**
(21) Application number: 23205631.7
(22) Date of filing: 25.11.2023
(51) Int. Cl.: F03D 7/02

(54) **WIND TURBINE YAW SYSTEM AND METHOD THEREOF**

(30) Priority: 05.06.2023 IN 202311038355
(71) Applicant: RE Technologies GmbH, 22083 Hamburg (DE)
(72) Inventor: Shankar, Reddy M, 516360 4/1576, Venkateshwarlapeta, Proddatur, Kadapa district Andhra Pradesh - 516360 (IN)
(74) Representative: Wetzel, Fritz

(57) **Abstract**

The present invention relates to a wind turbine. Particularly, the present invention provides wind turbine yaw system with hydraulic cylinders and method thereof.

## Description

### Field of the Invention

The present invention relates to a wind turbine. Particularly, the present invention provides wind turbine yaw system with hydraulic cylinders and method thereof.

### Background of the Invention

The following background discussion includes information that may be useful in understanding the present invention. It is not an admission that any of the information provided herein is prior art or relevant to the presently claimed invention, or that any publication specifically or implicitly referenced is prior art.

Generally, wind turbine generators include a rotor having multiple blades. The rotor is sometimes coupled to a housing that is positioned on top of a base, for example, a truss or tubular tower. some known utility grade wind turbines have rotor blades having predetermined shapes and dimensions. The rotor blades transform mechanical wind energy into induced blade lift forces that further induce a mechanical rotational torque that drives one or more generators, subsequently generating electric power. The generators are sometimes, but not always, rotationally coupled to the rotor through a gearbox. The gearbox steps up the inherently low rotational speed of the turbine rotor for the generator to efficiently convert the rotational mechanical energy to electrical energy, which is fed into the electric utility grid.

Further, during operation of wind turbines, a yawing device is used to orient the wind turbine into the direction of the wind. Some known yawing devices include an electrical or hydraulic motor and a high-ratio gear that acts on the toothed path of the yaw bearing and thus turns the machinery into the desired position. Due to the influence of wind shear, for example, the machinery is subjected to pulsating forces, both when yawing and when the machinery is stationary. These forces often have a dominating tendency in one direction, which means that they tend to turn the wind turbine out of the direction of the wind.

Known yawing devices include a single input shaft that receives a torque from a motor located within the wind turbine and translates this torque via a plurality of gearing assemblies to a single output torque shaft that facilitates yawing the wind turbine. However, because of the limited rotational force that can be applied by a single output shaft, numerous yawing devices are required within each wind turbine to supply the force needed to yaw the wind turbine, especially under less-than-optimal weather conditions, i.e., in high winds. Further, number of drives needed to control the operation of yawing device. These all components make turbine systems bulky and costlier. However, there has been a different solution proposed to solve the mentioned problem. For example, US20080207388A1 discloses a high ratio epicyclic gear assembly comprising two high torque planetary trains through which power flows via two parallel paths in one or other of which is an intermediate star train (7) with a low torque differential train or gear which transmits the combined power in such a way that the high torque planetary trains share the total torque in a predetermined ratio. However, this document still needs different types of drive to like the first sun wheel drives the planet carrier 5 of a differential train while the second sun wheel drives the differential annulus 6 via an intermediate star train 7 at a speed. The use of the drives makes the system bulky.

Further, US20100009799A1 discloses a transmission assembly included in a power generation system of a wind turbine, the wind turbine having one or more wind driven rotor blades. The transmission assembly includes a transmission including an input carrier and a gear-train rotatably coupling the input carrier to a transmission output, the input carrier configured to transfer a rotational input from the rotor blades to the gear-train and a removable input bearing cartridge coupled to a periphery of the input carrier, exterior to the gear-train, the removable bearing cartridge in axial alignment with the input carrier.

Another document KR20130009937A discloses a vertical axis wind power generation system with the function of controlling the angle of a blade comprises a rotary shaft, a connection plate, a plurality of impeller units (30), a nacelle unit, a power transfer unit, a post unit (60), a horizontal table, and a plurality of generators. The nacelle unit comprises a plurality of hydraulic cylinders, a horizontal rod, and a joint. The hydraulic cylinders are radially placed on the upper surface of the connection plate. The horizontal rod is placed in the hydraulic cylinder to be expanded. The joint is rotationally connected to the impeller unit. The horizontal table is fixed to the upper part of the post unit, and vertically formed to the post unit. The rotary shaft penetrates the centre of the horizontal table. The generators are radially placed on the horizontal table and produce electricity by rotary power from the power transfer unit.

Thus, the existing yaw control system suffers with following drawbacks like:
- Increase weight of the turbine
- Increase initial cost
- Fixed yawing speed
- More electrical controls
- Noise while yawing

Thus, there is a need for an effective wind turbine yaw system, which can solve the above-mentioned technical problem/disadvantages existing in the prior art.

There is also a need of low-cost turbine system where yaw drives are eliminated and that reduces the overall weight of system.

There is a further need of a yaw system which is based on the hydraulic force, does not require yaw drives, and consumes less space.

There is also a need for a turbine system that provides a cost-effective power solution with a lower number of components, that works on hydraulic force for more power and where the yawning speed is controlled by the flow of liquid.

### Object(s) of the Invention:

A primary object of the present invention is to overcome the drawbacks associated with the prior art.

Yet another object of the present invention is to provide a wind turbine yaw system with hydraulic cylinders.

Yet another object of the present invention is to provide a wind turbine yawing with hydraulic cylinders which is economical.

Yet another object of the present invention is to provide a wind turbine yawing with hydraulic cylinders which do not have any yaw drives.

Yet another object of the present invention is to provide a wind turbine yawing with hydraulic cylinders where yawing speed is controlled is controlled by the speed of oil flow.

Yet another object of the present invention is to provide a wind turbine yawing with hydraulic cylinders where applying force on yaw rim is adjusted by adjusting the hydraulic pressure. Yet another object of the present invention is to provide a wind turbine yawing with less electrical controllers.

### Summary of the Invention:

In an aspect of the invention, there is provided a wind turbine yawing system comprising:
a) at least two heavy-duty hydraulic cylinders, wherein the two heavy duty cylinders are configured to provide yawing;
b) at least one low-capacity hydraulic cylinder, wherein the one low-capacity cylinder is configured to retract a toothed rack;
c) a piston, wherein the piston is configured to pushes the toothed rack during a power stroke;
d) at least one hydraulic system, wherein the Hydraulic system is for oil supply to the cylinders with pressure;
e) at least one PLC controller, wherein the PLC controller is for control the valves of hydraulic system;
f) at least a sliding block
g) at least a support block;
h) plurality of sensors, wherein the sensors are configured to detect the power stroke completion and sending the signal to the one low-capacity cylinder to retract the toothed rack; and
   wherein based on the signal from a wind wane, the oil flows in the two heavy duty cylinders, and wherein the direction of oil flow is changed upon the completion of power stroke.

In an embodiment, the yawing is controlled by the flow rate of oil.

In an embodiment, the hydraulic pressure on the yaw rim is adjusted by varying the hydraulic pressure of the oil in the two heavy duty cylinders.

In another aspect of the invention, the method of operation of the wind turbine yaw system as described above, comprises the steps of:
a) receiving the signal from wind wane about the clockwise direction and speed of the wind to the controller;
b) sensing the signal from the sensor 3 as engaging of toothed rack to the controller and to the hydraulic system, then pump the flow of oil in the heavy-duty hydraulic cylinders wherein based on the flow of oil, a hydraulic pressure is created inside the cylinder/s which further pushes the piston to engage with toothed rack, causing the clockwise yawing for 1 power stroke;
c) activation of sensor 2 based on the completion of power stroke 1 of step (b), to send the signal for solenoid valve of retracting cylinder to disengage of toothed rack with yaw rim;
d) activation of another sensor 4 based on the completion of disengagement of toothed rack of step (c), wherein the controller senses the disengagement and activates a return stroke to return the oil flow in the reverse direction in said heavy-duty hydraulic cylinders, to place the piston at the starting position.

### Detail Description of the Drawings

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings in which:
**Figure 1****:** illustrates the yaw mechanism of the present invention.
**Figure 2****:** illustrates yawning operation in clockwise and anticlockwise direction controller of by the controllers in the present invention the present invention.
**Figure 3(a) *&* 3(b)****:** illustrates the positioning of sensor in the yawing mechanism of the present invention.
**Figure 4****:** illustrates the clockwise operation of the yawing in the present invention.
**Figure 5****:** illustrates the anticlockwise operation of the yawing in the present invention.

### Detailed Description of the Invention

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof. Throughout the patent specification, a convention employed is that in the appended drawings, like numerals denote like components.

Reference throughout this specification to "an embodiment, "another embodiment, "an implementation, "another implementation" or similar language means that a particular feature, structure, or characteristic described in connection with the embodiment is included in at least one embodiment of the present invention. Thus, appearances of the phrase "in an embodiment, "in another embodiment, "in one implementation, "in another implementation, and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures proceeded by "comprises... a" does not, without more constraints, preclude the existence of other devices or other sub-systems or other elements or other structures or additional devices or additional sub-systems or additional elements or additional structures.

The present invention provides an efficient wind turbine yaw system. The wind turbine yaw system is based on hydraulic cylinders, which makes the whole system highly economic, simple, and light weight.

In an embodiment, the invention provides a wind turbine yaw system where yawing speed is controlled by the speed of oil flow.

In another embodiment, the wind turbine yaw system is very simple and has very few electrical controllers.

In an embodiment, the force on yaw rim is controlled by the hydraulic pressure.

In an aspect of the present invention, wind turbine yaw system comprises:
1. Main frame
2. Yaw rim (Yaw bearing)
3. Toothed rack
4. Two heavy duty hydraulic cylinders
5. One low-capacity hydraulic cylinder
6. Sliding block
7. Support blocks
8. Hydraulic system.
9. PLC controller

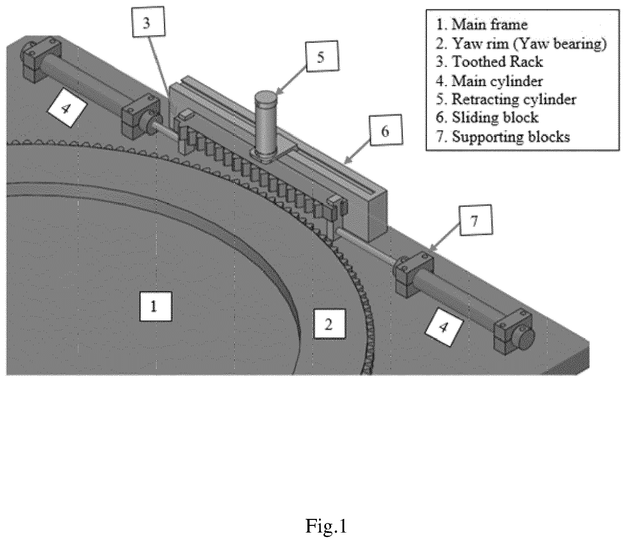

Figure 1 shows parts of the yaw mechanism where Main frame is denoted by 1, Yaw rim is denoted by 2, Toothed Rack is denoted by 3, Main cylinder is denoted by 4, Retracting cylinders by 5, Sliding block is denoted by 6 and support blocks is denoted by 7.

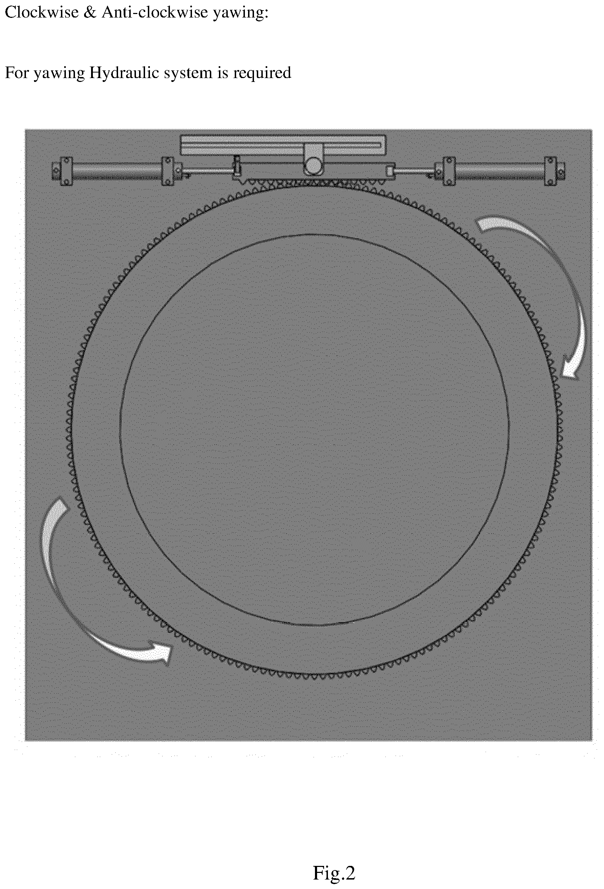

Figure 2 shows clockwise and anti-clockwise rotation of the yaw.

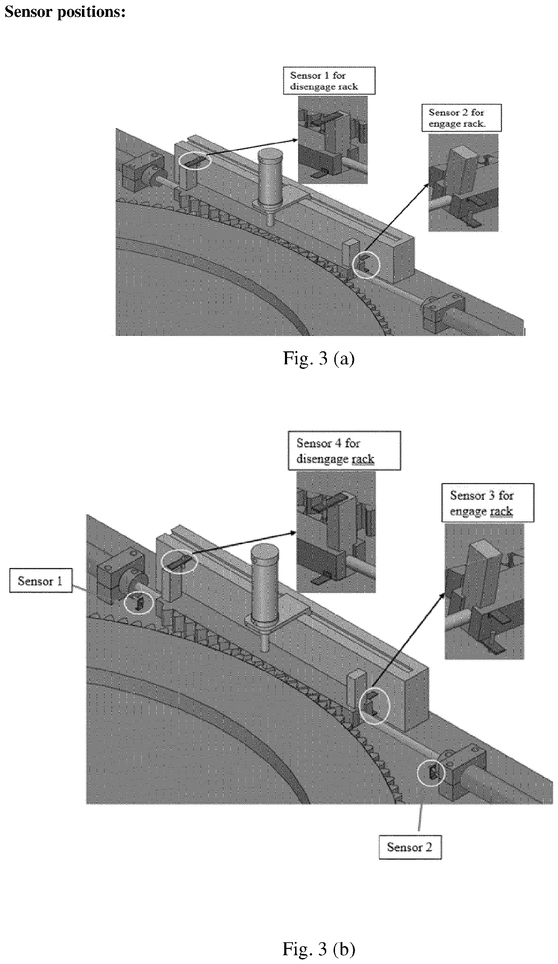

Figure 3(a) shows at least 2 sensors mounting positions. Sensors 1 and 2 controls vertical movement of the toothed rack and wherein both forward and return strokes of main cylinders can be controlled by presetting time which is set in PLC controller.

In an embodiment of Figure 3 (b) shows at least 4 sensors, where sensor 4 controls the disengagement of the rack with yaw rim and sensor 3 controls the engagement movements of the rack with yaw rim. In another embodiment of Figure 3 (a), in yawing operation sensor 1 and sensor 2 controls the movement of the of the piston of the two hydraulic cylinders and it also controls the movement of the piston and the toothed rack simultaneously to complete the yawing cycle. In another embodiment of Figure 3 (b), sensor 4 and sensor 3 compliments the operation of sensor 1 and sensor 2 in yawing operation but in an embodiment yawing operation is completed by sensor 1 and sensor 2 together.

In a preferred embodiment, the wind turbine yawing system comprises following components:
a) at least two heavy-duty hydraulic cylinders, wherein the two heavy duty cylinders are configured to provide yawing;
b) at least one low-capacity hydraulic cylinder, wherein the one low-capacity cylinder is configured to retract a toothed rack;
c) a piston, wherein the piston is configured to pushes the toothed rack during a power stroke;
d) at least one hydraulic system, wherein the hydraulic system is for oil supply to the cylinders with pressure;
e) at least one PLC controller, wherein the PLC controller is for control the valves of hydraulic system;
f) at least a sliding block;
g) at least a support block
h) plurality of sensors, wherein the sensors are configured to detect the power stroke completion and sending the signal to the one low-capacity cylinder to retract the toothed rack; and
   wherein based on the signal from a wind wane, the oil flows in the two heavy duty cylinders, and
   wherein the direction of oil flow is changed upon the completion of power stroke.

In an embodiment, the yawing is controlled by the flow rate of oil.

In an embodiment, the hydraulic pressure on the yaw rim is adjusted by varying the hydraulic pressure of the oil in the two heavy duty cylinders.

In another embodiment, the wind turbine yawing system operates through the steps of:
a) receiving the signal from wind wane about the anti-clockwise direction and speed of the wind to the controller;
b) sensing the signal from the controller to the hydraulic system and pump the flow of oil in the heavy-duty hydraulic cylinders wherein based on the flow of oil, a hydraulic pressure is created inside the cylinder/s which further pushes the piston to engage with toothed rack, causing the anti-clockwise yawing for 1 power stroke;
c) activation of sensor 1 based on the completion of power stroke 1 of step (b), to send the signal for solenoid valve of retracting cylinder to disengage of toothed rack with yaw rim;
d) activation of another sensor 4 based on the completion of disengagement toothed rack of step (c), wherein the controller senses the disengagement and activates a return stroke to return the oil flow in the reverse direction in said heavy-duty hydraulic cylinders, to place the piston at the starting position.

In an embodiment, the steps (b) to (d) are performed in a cyclic manner, for the sequential movement of yawing.

### The Invention is further described with the help of no-limiting examples:

In working, the system of the present invention dynamically changes the direction of the Nacelle to align into wind direction. The controller sends the signal to hydraulic unit to pump the oil with designed pressure to both cylinders and it creates push and pull force simultaneously on the toothed rack this enables rotation of the nacelle, as soon as Nacelle aligned with wind direction power supply will cut-off to the hydraulic system.

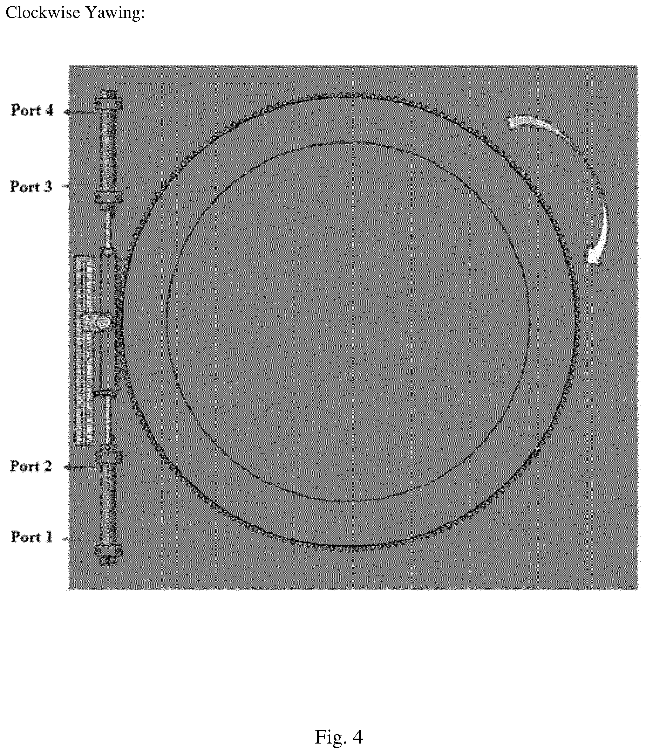

In an embodiment, for clockwise rotation as shown in figure 4, as soon as controller receives signal from wind vane, solenoid valve will be de activate oil from the retracting cylinder goes to the tank and toothed rack will engage due to self-weight and thereafter sensor (3) will get activated and signal goes to the hydraulic system motor through controller and motor will run and pump the oil into both cylinders simultaneously from Port 1 & Port 3 and it creates push and pull force on the toothed rack and thereby it rotes the nacelle and forward stroke will continue until sensor (2) activated. Then signal from sensor (2) goes to the solenoid valve of retracting cylinder through controller and it gives the signal to the hydraulic system and power will supply to the motor and motor will pump the oil to the retracting cylinder. The flow of the oil in the retracting cylinder leads to disengagement of the toothed rack with the yaw rim and stoke continues until sensor (4) activates. When signal from sensor (4) goes to the controller and thereafter controller gives the signal to the hydraulic system and motor will run and then pump the oil to both cylinders from Port 2 & Port 4 and toothed rack will come to its' starting position during its' return stroke and sensor 1 will be activated.

For further rotation of nacelle again continue above steps both forward and return strokes until nacelle aligned into wind direction.

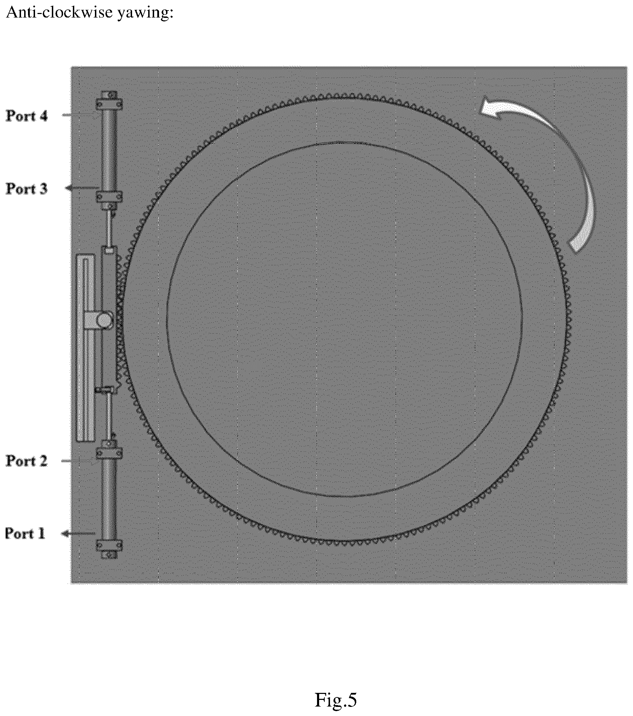

In an embodiment, for anti-clock wise rotation as shown in figure 5, as soon as controller receives signal from wind vane, solenoid valve will be de activate and oil from the retracting cylinder goes to the tank and toothed rack will engage due to self-weight and sensor (3) will activate and signal goes to the hydraulic system motor through controller and motor will run and pump the oil into both cylinders simultaneously from Port 2 & Port 4 and it creates push and pull force on the toothed rack and thereby it rotes the nacelle and forward stroke will continue until activates sensor (2).

Signal from sensor (2) goes to the solenoid valve of retracting cylinder through controller and it gives the signal to the hydraulic system and power will supply to the motor and pump the oil to the retracting cylinder and it leads to disengage the toothed rack with the yaw rim and stoke continues until sensor (4) activates.

Signal from sensor (4) goes to the controller and controller gives the signal to the hydraulic system and motor will run and then pump the oil to both cylinders from Port 1 & Port 3 and toothed rack will come to its' starting position during its' return stroke and sensor 1 will be activated.

For further rotation of nacelle again continue above steps both forward and return strokes until nacelle aligned into wind direction.

## Claims

1. A wind turbine yawing system comprising:
a) at least two heavy-duty hydraulic cylinders, wherein the two heavy duty cylinders are configured to provide yawing;
b) at least one low-capacity hydraulic cylinder, wherein the one low-capacity cylinder is configured to retract a toothed rack;
c) a piston, wherein the piston is configured to pushes the toothed rack during a power stroke;
d) at least one Hydraulic system, wherein the Hydraulic system is for oil supply to the cylinders with pressure;
e) at least one PLC controller, wherein the PLC controller is for control the valves of Hydraulic system;
f) at least a sliding block;
g) at least a support block;
h) plurality of sensors, wherein the sensors are configured to detect the power stroke completion and sending the signal to the one low-capacity cylinder to retract the toothed rack; and
wherein based on the signal from a wind wane, the oil flows in the two heavy duty cylinders, and
wherein the direction of oil flow is changed upon the completion of power stroke.

2. The wind turbine yawing system as claimed in claim 1, wherein the yawing is controlled by the flow rate of oil.

3. The wind turbine yawing system as claimed in claim 1, wherein hydraulic pressure on the yaw rim is adjusted by varying the hydraulic pressure of the oil in the two heavy duty cylinders.

4. A method of operation of the wind turbine yaw system, as claimed in claim 1, comprising the steps of:
a) receiving the signal from wind wane about the clockwise direction and speed of the wind to the controller;
b) sensing the signal from the sensor 3 as engaging of toothed rack to the controller and to the hydraulic system, then pump the flow of oil through ports 1 & 3 in the heavy-duty hydraulic cylinders wherein based on the flow of oil, a hydraulic pressure is created inside the cylinder/s which further pushes the piston to engage with toothed rack, causing the clockwise yawing for 1 power stroke;
c) activation of sensor 2 based on the completion of power stroke 1 of step (b), to send the signal for deactivation and disengagement of piston to disengage with toothed rack with yaw rim;
d) activation of another sensor 4 based on the completion of disengage of toothed rack as step (c), wherein the controller senses the disengagement and activates a return stroke to return the oil flow in the reverse direction in said heavy-duty hydraulic cylinders, to place the piston at the starting position.

5. The method as clamed in claim 4, wherein the steps (b) to (d) are performed in a cyclic manner, for the sequential movement of yaw ring.

6. The method as clamed in claim 4, wherein a sensor 3 gets activated and oil enters through port 2 & 4 for anti-clockwise yawing and where in a sensor 4 activated and oil enters ports through ports 1 & 3 while return stroke.

7. The method as claimed in claims 4 and 6, wherein the steps (b) to (d) are performed in sequential manner, for the continuous yawing.
